# EUROPEAN PATENT APPLICATION

(11) **EP 1 103 976 A1**
(43) Date of publication of application: **30.05.2001**
(21) Application number: 00309144.4
(22) Date of filing: 17.10.2000
(51) Int. Cl.: G11B 33/04

(54) **Device for storing a data disc**

(30) Priority: 25.11.1999 CN 99254485
(71) Applicant: Sinta Technology Corp., Shan Chung, Taipei Hsien (TW)
(72) Inventor: Ku, Chia-Chun, Schan Chung, Taipei Hsien (TW)
(74) Representative: Molyneaux, Martyn William

(57) **Abstract**

A device for supporting a data disc 10 including a carrier plate 111 having a longitudinal axis, in which the length of the carrier plate along the longitudinal axis is larger than a diameter of a disc 20 to be stored and the width of the carrier plate in a direction transverse to the longitudinal axis is smaller than the diameter of the disc. A retainer 12 and a resilient clip 13 are formed at diametrically opposed positions substantially along the longitudinal axis on at least one side of the carrier plate for holding a rim of the disc 20 by a resilient force exerted by the resilient clip 13. A hook 14 is provided at an upper, in use, end of the longitudinal axis for hanging the device on a support such as a rod or cord.

## Description

The present invention relates to a device for storing a data disc.

Data discs, such as compact discs for audio and video, digital versatile discs (DVDs) and CD-ROMs, are now widely used information storage media. Means for storing such discs and preventing them from being spoiled or damaged are also required and have been developed. Common storage means for discs include portable cartridges for holding one or two discs each, and storage towers or cabinets which include a plurality of carriers for holding and arranging several discs.

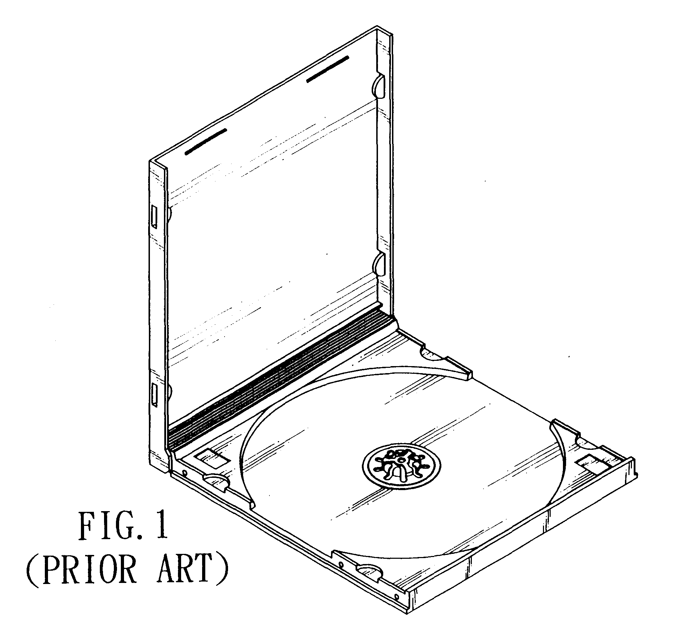

Current data discs are usually circular plane discs with a diameter of about 120 mm and having a central through hole. Around the centre hole, there is an annular inner unrecorded portion with a width of about 15 mm. Outside the centre unrecorded portion there is an annular data portion. Finally, at the periphery of the disc, there is annular outer unrecorded portion having a width of about 1 mm. To prevent the disc from being spoiled or damaged, a disc is usually stored in a disc cartridge, as shown in Figure 1. Protruding clamping figures are located in the centre portion of the disc cartridge for holding the disc by the centre hole and preventing data and reflective surfaces of the disc from contacting surfaces of the cartridge. The clamping fingers have to be elastic and strong enough to hold the disc in position by the centre hole. The centre hole is ideal for holding the disc since the adjacent unrecorded portion has no data formed thereon. The cartridges are commonly made of plastics by an injection moulding process, and utilise the elastic characteristics of the plastics for the clamping force.

The aforesaid conventional disc cartridge is composed of three components, i.e. a base, a cover and a clamping member. The more the number of components, the more material is required and the longer the assembly time and higher the cost required after moulding. So, the plurality of components increases the cost of production. Also, to use the cartridge, the user has to push the disc onto, or pull the disc out from, the clamping fingers of the cartridge with a certain force against the clamping force of the fingers. Therefore, excessive force may be applied to the disc and cause bending of, or even damage to, the disc.

Such cartridges are disclosed in US-A-5533615, US-A-5845771, US-A-5924564 and US-A-5938020.

In US-A-5533615, a disc storage case comprises a cover, a planar surface with a receptacle, and retention means. The retention means include a fixed lip and a pivotable lip operated by a button. Instead of conventional retention means at the centre hole, the retention means operate at the rim of the disc. However, a plurality of components are required which require complicated assembly and cause higher cost.

In US-A-5924564 a disc storage device is disclosed in the form of a disc cartridge including a bottom shell, an upper shell and a disc holder plate. A further spring element is fastened to the disc holder plate for imparting a pressure to the stored disc and causing the centre hole of the stored disc to be firmly retained in engagement with a retainer flange adapted to engage the centre hole of the stored disc. The components are even more complicated and costly.

It is therefore an object of the present invention to provide a holder that can hold at least one data disc.

According to the present invention there is provided a device for storing at least one data disc, comprising: a carrier plate; retainer means integrally formed on a rim of said carrier plate for holding a first portion of a rim of the data disc; resilient clip means integrally formed at a diametrically opposed position to said retainer means on the rim of said carrier plate, for holding a second portion of the rim of the data disc by a resilient force exerted by said resilient clip; and hook means, integrally formed on an upper, in use, portion of said carrier plate, for hanging the device on a support.

The invention will now be described by way of example with reference to the accompanying drawings in which:
Figure 1 is a perspective view of a conventional disc cartridge;
Figure 2 is a perspective view of an data disc holder according to the present invention;
Figures 3A and 3B are sequential sectional side views showing a data disc being placed in the disc holder of Figure 2;
Figure 4 is a front view of a disc holder of the present invention holding a data disc; and
Figure 5 is a perspective view showing an application of disc holders of the present invention.

The present invention provides a simpler construction than the prior art for storing data discs. The holder of the invention uses only one component that can hold at least one data disc by the rim of the disc.

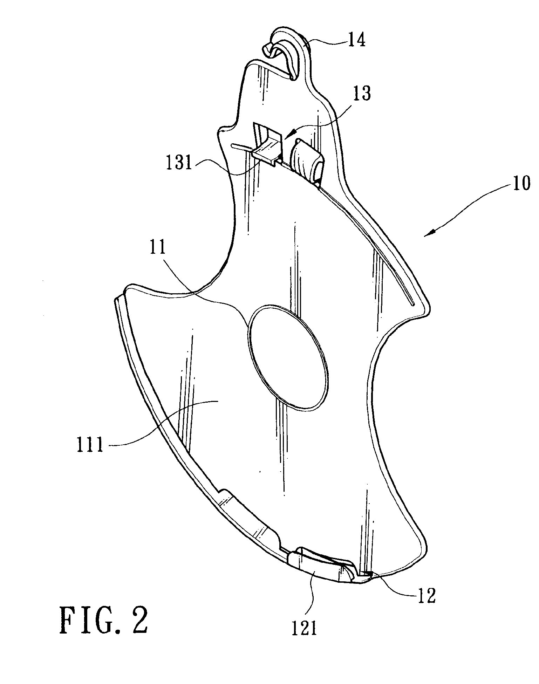

As shown in Figures 2, 3A and 4, a data disc holder 10 is made of plastics material by injection moulding a plate shape unitary piece. The size of the holder 10 is close to the size of the data disc 20, but with a vertical, in use, measurement larger than the diameter of the disc 20, and a horizontal, in use, measurement smaller than the diameter thereof.

At the centre of a carrier plate 111, a spacing ring 11 protrudes from the surface of the plate. On opposite positions along a vertical, in use, direction on one side of the carrier plate 111, a retainer 12 and a clip 13 are integrally formed for holding the rim of the disc 20 by the resilient force of the resilient clip 13. At one upper, in use, end of the carrier plate 111, a unitary hook 14 is integrally formed for hanging the disc holder 10. The spacing ring 11 engages the central unrecorded portion of the data disc 20, to ensure there is a clearance between the disc 20 and the plate 111 to prevent scratch damage to the disc 20. The retainer 12 includes a flange, extending from the periphery of the plate 111, and a wall and tang 121 for holding a portion of a rim of the disc 20 on the flange between the wall and the tang. The resilient clip 13 is formed in the periphery of the plate 111 and in a diametrically opposite position to the retainer 12 for fastening the disc 20 in place. The resilient clip 13 provides a gripping force in its natural position for holding the disc 20, and can be pushed to release the disc 20. A stopper 131 is formed on the end of the resilient portion 13 for engaging the disc 20. The unitary hook 14 extends from the plate 111 and is integrally formed with a downward, in use, opening to be hung on a rod or cord, for example, a rod located in a drawer or supporting frame, so as to store the data disc 20 on the disc holder 10 in a hanging manner.

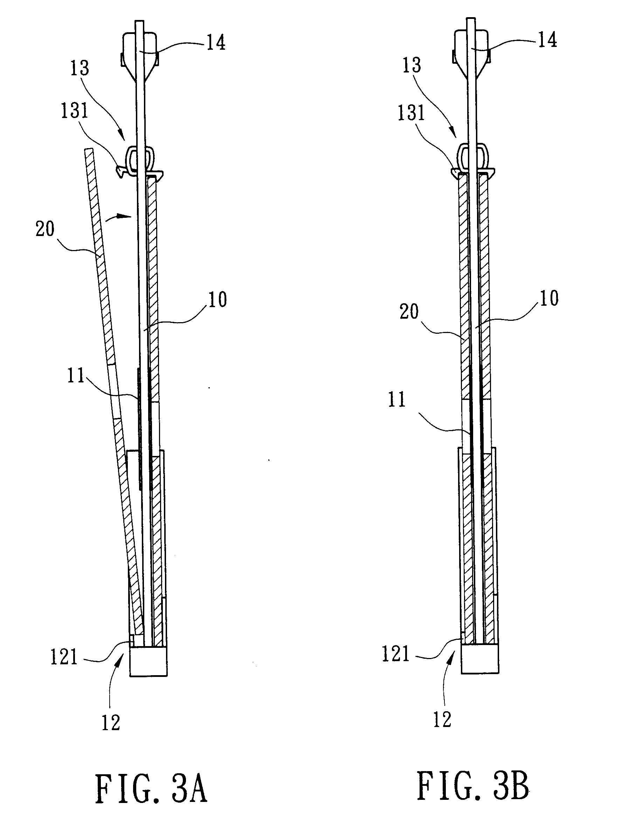

The operation of loading a data disc into the disc holder 10 is shown in Figures 3A and 3B. In figure 3A, another data disc has been stored on the rear of the holder 10. On the front of the holder, a user can hold the disc 20 at a titled angle to insert one end of the disc 20 into the retainer 12 to be held between the wall and tang. Using a finger of a hand which holds the holder, the back of resilient clip 13 is pushed to bend the resilient clip 13 outward until the disc 20 is moved into place and held by the stopper 131. The wall and tang 121 of the retainer 12 and the stopper 131 of the resilient clip grasp the rim of the disc 20 at the 1 mm width annular outer unrecorded portion thereof and firmly hold the disc 20.

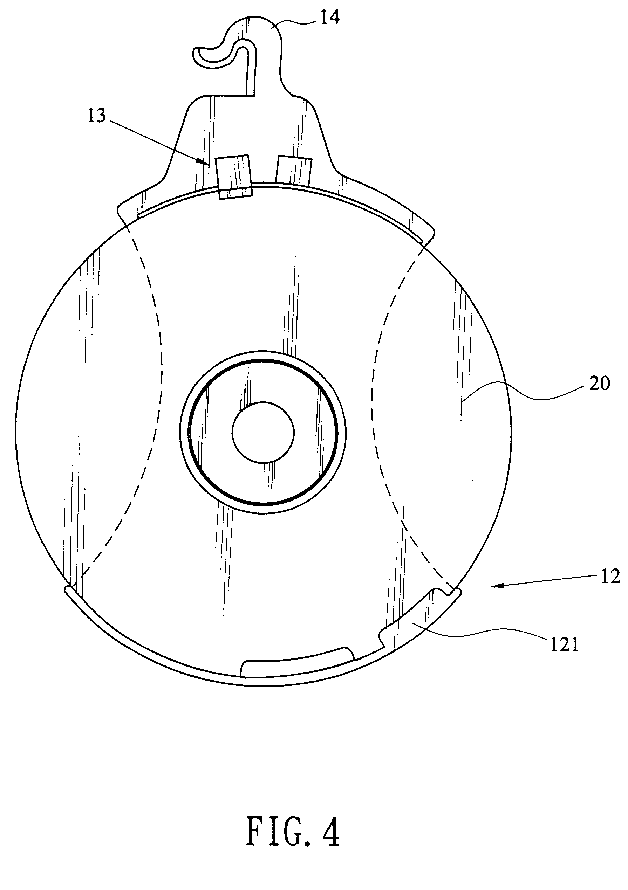

As shown in Figure 4, since the horizontal, in use, measurement of the disc holder 10 is smaller than the size of the disc 20, two portions of the disc 20 are exposed to be easily grasped by the user when the disc 20 is to be inserted into, or removed from, the disc holder 10. When removing the disc 20, the stopper 131 of the resilient clip 13 can be raised to release one side of the disc 20, then the opposed side of the disc 20 can be removed from the retainer 12.

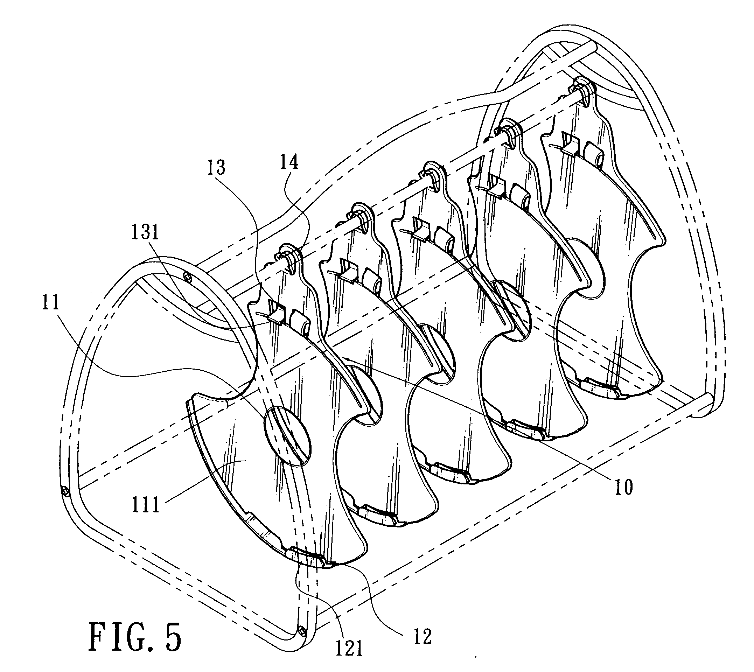

With the disc 20 loaded in the disc holder 10, the disc holder can be hung on a rod or cord for storage. As shown in Figure 5, using a rod located in a frame, the disc holder 10 can be hung on the rod by the unitary hook 14. Thus the frame can hold a plurality of disc holders 10 on the rod. Moreover, the disc holder 10 can be hung on the rod without distant and directional restrictions by the unitary hook 14.

As shown in the drawings, the disc holder 10 can be in the form of a two-disc holder. In this embodiment the disc holder includes two spacing rings 11 protruding respectively from both sides of the plate 111; two retainers 12 and two resilient clips 13 are formed one on each side. Therefore, one disc 20 can be held on each side of the disc holder 10 respectively.

As described above, the disc holder according to the present invention utilises retainers and resilient clips on a plate carrier to hold data discs by the outer unrecorded portions of the discs, instead of using clamping fingers to hold the centre holes. The disc holder can be made in a unitary piece in one operation by injection moulding, without the need of further elements or assembly. Therefore, the invention simplifies the production, lowers cost, saves disc storage space and is practical.

It will be apparent that various embodiments of the invention are possible. Such variations are to be regarded as within the scope of the invention, and all such modifications as would be obvious to one skilled in the art are intended to be included within the scope of the following claims.

## Claims

1. A device (10) for storing at least one data disc (20), comprising:
a carrier plate (111);
retainer means (12) integrally formed on a rim of said carrier plate for holding a first portion of a rim of the data disc;
resilient clip means (13) integrally formed at a diametrically opposed position to said retainer means (12) on the rim of said carrier plate (111), for holding a second portion of the rim of the data disc by a resilient force exerted by said resilient clip (13); and
hook means (14), integrally formed on an upper, in use, portion of said carrier plate, for hanging the device on a support.

2. A device (10) as claimed in claim 1, wherein the carrier plate has a first dimension which is larger than a transverse dimension.

3. A device (10) as claimed in claims 1 or 2, wherein the resilient clip means (13) further include terminal stopper means (131).

4. A device (10) as claimed in any of the preceding claims, wherein the carrier plate (111) includes a spacing ring (11) protruding from a surface of the carrier plate at a centre thereof.

5. A device (10) as claimed in any of the preceding claims, wherein both major faces of the carrier plate are provided with retaining means (12) and resilient clip means (13) respectively so as to accommodate two data discs, one on each side of the carrier plate (111) respectively.

6. A device as claimed in any preceding claim in combination with a data disc wherein the carrier plate has a first dimension which is larger than the diameter of a data disc and a transverse dimension which is smaller than the diameter of the disc.
